# EUROPÄISCHE PATENTSCHRIFT

(11) **EP 2 757 289 B1**
(45) Veröffentlichungstag und Bekanntmachung des Hinweises auf die Patenterteilung: **31.01.2018**
(21) Anmeldenummer: 13195258.2
(22) Anmeldetag: 02.12.2013
(51) Int. Cl.: F16H 59/04, F16H 61/26, F16H 61/34

(54) **Schalthebelanordnung zur manuellen Betätigung eines Gangwechselgetriebes**
Shift lever assembly for manual operation of a speed-change gear box
Agencement de levier de commutation pour l'actionnement manuel d'une boîte de vitesses

(30) Priorität: 21.01.2013 DE 102013200829
(43) Veröffentlichungstag der Anmeldung: 23.07.2014
(73) Patentinhaber: Bayerische Motoren Werke Aktiengesellschaft, 80809 München (DE)
(72) Erfinder: Wagner, Norbert, 81549 München (DE); Braun, Sandra, 81925 München (DE)

(56) Entgegenhaltungen:
- EP-A1- 0 006 330
- DE-A1- 4 100 574
- DE-A1- 19 529 878
- DE-A1- 19 646 648
- DE-B3-102011 003 752
- JP-U- S61 138 720

## Beschreibung

Die vorliegende Erfindung betrifft eine Schalthebelanordnung nach dem Oberbegriff des Anspruchs 1.

Von einem Verbrennungsmotor angetriebene Fahrzeuge besitzen aufgrund der geringen Drehzahlspreizung des Motors ein Gangwechselgetriebe, welches vielfach von Hand betätigt wird. Zu diesem Zweck ist im Innenraum des Fahrzeugs ein Schalthebel mit einem daran angeordneten Schalthebelknopf vorgesehen, der vom Fahrer des Fahrzeugs zum Gangwechsel manuell betätigt wird.

Der Verbrennungsmotor ist im Motorraum eines Fahrzeugs über Motorlager an die Karosserie angebunden und kann daher vom Verbrennungsmotor induzierte Schwingungen auf die Karosserie übertragen. Um die Einkopplung störender Schwingungen in die Karosserie zu vermeiden, ist es erforderlich, die Motorlager hinsichtlich ihrer Kennlinie relativ weich auszulegen, was beim Startvorgang des Verbrennungsmotors und beim Übergang vom Schubbetrieb in den Zugbetrieb dazu führt, dass der Verbrennungsmotor mit dem daran angekoppelten Gangwechselgetriebe eine Kippbewegung um die Längsachse des Fahrzeugs ausführt.

Wenn die Schalthebelanordnung zur Vermeidung von Elastizitäten im Betätigungsweg vom Schalthebel zum Getriebe mit einer Schaltstange als Betätigungselement versehen ist, führt die Kippbewegung des Motors und des Getriebes dazu, dass der Schalthebel ebenfalls eine Kippbewegung ausführt, was zu störenden Querbewegungen des Schalthebelknopfs führt. Bei mit Start-Stopp-Systemen ausgestatteten Fahrzeugen tritt dies besonders störend in den Vordergrund, da es bei jedem Start-Stopp-Vorgang zu einer Querbewegung des Schalthebelknopfs kommt. Die Lateralbewegung des Schalthebelknopfes ist dabei eine überlagerte Bewegung aus der Lateralbewegung des Getriebegehäuses bei der Verkippung um eine Längsachse des Getriebes und einer Lateralbewegung der Schaltstange aufgrund ihrer Anbindung am getriebeseitigen Betätigungselement, welches der Kippbewegung des Getriebes folgt.

Aus der Druckschrift US 4,509,384 ist eine Schalthebelanordnung mit einem einen Schalthebelknopf aufweisenden Schalthebel zur manuellen Betätigung eines Gangwechselgetriebes eines Fahrzeugs mittels einer auf Getriebebauteile wirkenden Schaltstange bekannt. Der Schalthebel ist zudem zum Wählen verschiedener Schaltgassen und zum Schalten verschiedener Gangstufen an einem Gelenk verschwenkbar angelenkt. Schwenkbewegungen des Schalthebels werden dabei auf die Schaltstange, und von dieser auf das Gangwechselgetriebe übertragen.

Aus der auf die Anmelderin zurückgehenden Druckschrift DE 196 32 859 A1, welche alle Merkmale des Oberbegriffs des Anspruchs 1 offenbart, ist eine Schalthebelanordnung bekannt geworden, die den Komfort mindernde, störende Bewegungen des Schalthebelknopfs im Innenraum des Fahrzeugs weitgehend vermeidet. Diese Schalthebelanordnung weist einen Schalthebel mit einem Schalthebelknopf zur manuellen Betätigung eines Gangwechselgetriebes eines Fahrzeugs mittels mindestens einer auf Getriebebauteile wirkenden Schaltstange auf. Der Schalthebel ist dabei mit einem ersten Gelenk relativ zu einem den Schalthebel am Gangwechselgetriebe axialfest an einem Stützlager abstützenden Schaltarm gelagert und ist zum Wählen verschiedener Schaltgassen in Längsrichtung des Fahrzeugs und zum Schalten verschiedener Gangstufen in Querrichtung an dem Gelenk verschwenkbar angelenkt, wobei der Schalthebel mit der Schaltstange über ein mehrere Verbindungsstangen aufweisendes Vierkugelgelenk mit der Schaltstange gekoppelt ist, derart, dass Schwenkbewegungen des Schalthebels auf Bewegungen der Schaltstange übersetzt übertragen werden.

Obwohl sich diese Schalthebelanordnung in der Praxis bereits positiv bewährt hat, besteht noch Raum für Verbesserungsmöglichkeiten. Die bekannte Schalthebelanordnung weist viele Bauteile auf, benötigt in einem Fahrzeug viel Bauraum, und der Einbau einer solchen Schalthebelanordnung in einem Fahrzeug ist relativ aufwendig und teuer.

Anhand der DE19646648 A1, welche alle Merkmale des Oberbegriffs des Anspruchs 1 offenbart, ist eine äußere Getriebeschaltung bekannt geworden, mit der die Problematik der Übertragung von Schwingungen vom Getriebe auf den Schalthebel unterdrückt werden soll. Zu diesem Zweck ist der Schaltarm der bekannten Getriebeschaltung am Getriebe in einem horizontal angebrachten Etastomerkörper gelagert und zwar über einen ebenfalls horizontal verlaufenden Gelenkbolzen.

Anhand der DE 10 2011 003 752 B3 ist eine Schalthebelanordnung bekannt geworden mit einem Schalthebel zur manuellen Betätigung eines Gangwechselgetriebes eines Fahrzeugs. Diese bekannte Schalthebelanordnung zeichnet sich dadurch aus, dass der Schaltarm, mit dem der Schalthebel am Getriebegehäuse gelagert wird, so vorgesehen ist, dass eine Kippbewegung des Gangwechselgetriebes um eine Längsachse des Fahrzeugs zu einer Verlagerungsbewegung des Schalthebellagers in einer zu einer lateralen Kippbewegungsrichtung des Gangwechselgetriebes entgegengesetzten lateralen Richtung führt.

Anhand der EP 0 006 330 A1 ist eine Schalthebelanordnung für ein Fahrzeug bekannt geworden, bei dem sich der Schalthebel mittels eines Stützstabs über ein an der Fahrzeugkarosserie starr angeordnetes Lager abstützt. Dabei besitzt ein Schalthebelgelenk einen Drehpunkt, der zwischen den Gelenk und Verbindungsabschnitt vorgesehen ist und an dem sich wiederum der Schalthebel gelenkig abstützt.

Es ist daher Aufgabe der vorliegenden Erfindung, die bekannte Schalthebelanordnung weiter zu verbessern und den zur Anordnung der Schalthebelanordnung benötigten Bauraum zu verringern.

Die Erfindung löst diese Aufgabe mit den Merkmalen nach dem Anspruch 1. Vorteilhafte Ausgestaltungen sind in weiteren Ansprüchen beschrieben.

Die Erfindung sieht eine Schalthebelanordnung vor mit einem Schalthebel zur manuellen Betätigung eines Gangwechselgetriebes eines Fahrzeugs mittels mindestens eines auf Getriebebauteile wirkenden Betätigungselements und einem ersten Gelenk, welches den Schalthebel relativ zu einem den Schalthebel an einem Gehäuse des Gangwechselgetriebes axialfest an einem Stützlager abstützenden Schaltarm lagert, wobei der Schalthebel zum Wählen verschiedener Schaltgassen in einer ersten Richtung (W) und zum Schalten verschiedener Gangstufen in einer zur ersten Richtung (W) im Wesentlichen orthogonalen Richtung (S) am ersten Gelenk verschwenkbar angelenkt ist, und mit einer mit dem Betätigungselement gekoppelten Schaltstange, wobei das Stützlager eine relativ zur Längsachse des Schaltarms unter einem ersten Winkel zur Längsachse der Schaltstange (12) angeordnete erste Schwenkachse aufweist, an der der Schaltarm relativ zum Gehäuse des Gangwechselgetriebes verschwenkbar angeordnet ist und zwischen der Schaltstange und dem Betätigungselement ein Schaltstangengelenk mit einer relativ zur Längsachse der Schaltstange unter einem zweiten Winkel von 20 Grad bis 80 Grad zur Längsachse der Schaltstange angeordneten zweiten Schwenkachse vorgesehen ist, an der die Schaltstange relativ zum

Betätigungselement verschwenkbar angeordnet ist.

Die erfindungsgemäße Schalthebelanordnung kann an Fahrzeugen mit von Hand zu schaltenden Gangwechselgetrieben einfach appliziert werden, da sie im Gegensatz zu bekannten Schalthebelanordnungen wenig Bauraum einnimmt und insbesondere nicht bezüglich Antriebselementen in der Form von beispielsweise einer Kardanwelle, die das getriebeseitige Abtriebsmoment auf den Triebstrang des Fahrzeugs überträgt, hinsichtlich des Packagings Probleme verursacht.

Bei der bekannten Schalthebelanordnung ist es notwendig, oberhalb der Kardanwelle Raum für die Verbindungsstangen des Vierkugelgelenks vorzusehen. Dies führt dazu, dass der. Schaltarm relativ zum Getriebegehäuse in Richtung nach oben verkippt im Fahrzeug eingebaut werden muss, was aufgrund der dann relativ zum Getriebegehäuse in Richtung nach oben verlagerten Betätigungsebene des Schalthebelknopfs zu einer Verzerrung des dem Benutzer bekannten H-Schaltschemas zu einem für den Benutzer gewöhnungsbedürftigen W-Schaltschema führt.

Bei der erfindungsgemäßen Schalthebelanordnung kann hingegen das dem Benutzer bekannte H-Schaltschema beibehalten werden. Das Problem der unerwünschten Bewegung des Schalthebelknopfs am Schalthebel wird durch die Integration zweier im Winkel geneigter Schwenkachsen in die Schalthebelanordnung gelöst. Der Schalthebel ist an einem ersten Gelenk, welches am Schaltarm angeordnet ist, gelagert. Eine Kippbewegung des Getriebes führt aufgrund der relativ zur Längsachse des Schaltarms unter einem ersten Winkel angeordneten ersten Schwenkachse zu einer horizontalen Bewegung des Schalthebelgelenks aufgrund der Möglichkeit des Schaltarms, an der ersten Schwenkachse eine Drehbewegung um die Längsachse des Schaltarms herum auszuführen. Der Betrag der seitlichen Bewegung des Schalthebelgelenks hängt dabei vom Betrag des ersten Winkels ab und kann dem jeweiligen Anforderungsprofil und dem lateral zur Verfügung stehenden Bauraum entsprechend angepasst werden. So ermöglicht es die erfindungsgemäße Konfiguration auch, die Lateralbewegung des Schalthebelgelenks auf Null zu reduzieren.

Bei der lateralen Drehkippbewegung des Getriebes um die Längsachse als Drehachse führt die Schaltstange an der zweiten Schwenkachse eine Drehbewegung um die Längsachse der Schaltstange herum aus, und zwar in einer Richtung entgegengesetzt zur Drehrichtung des Getriebes aufgrund seiner Drehkippbewegung. Die Drehbewegung der Schaltstange wird auf den Schalthebel übertragen. Hat der Schalthebel vor der Kippbewegung des Getriebes eine vertikale Lage, so führt die Drehbewegung der Schaltstange dazu, dass sich der Schalthebel aus der vertikalen Lage in eine zur Drehbewegungsrichtung des Getriebes entgegengesetzte Richtung neigt. Bewegt sich also aufgrund der Drehbewegungsrichtung des Getriebes das Schalthebelgelenk horizontal in Richtung nach rechts, so bewegt sich auch der Schalthebel aufgrund der horizontalen Verlagerung des Schalthebelgelenks insgesamt in Richtung nach rechts, während er aus der vertikalen Lage ausgelenkt wird und sich aus der Vertikalen in Richtung nach links neigt, so dass die am Schalthebelknopf sichtbare Lateralbewegung betragsmäßig verringert wird auf die Differenz zwischen dem Betrag der Lateralbewegung des Schalthebelgelenks und dem Betrag der in entgegengesetzte Richtung verlaufenden Lateralbewegung des Schalthebelknopfs. Auf diese Weise lässt sich der für den Benutzer sichtbare Lateralweg des Schalthebelknopfes deutlich verringern, so dass die seitliche Bewegung des Schalthebelknopfes nicht mehr als störend empfunden wird. Die Gesamtbewegung des Schalthebelknopfes setzt sich also aus der Führungsbewegung des Schalthebelgelenks und der Relativbewegung des Schalthebelknopfes relativ zum Schalthebelgelenk zusammen.

Es ist nach einer Weiterbildung der Erfindung vorgesehen, dass die erste Schwenkachse relativ zu einer Längsachse des Gehäuses des Gangwechselgetriebes am Stützlager im Winkel relativ zur Horizontalen veränderbar gelagert ist. Damit kann einer etwaig auftretenden Notwendigkeit Rechnung getragen werden, den Schaltarm relativ zur Längsachse des Getriebes in Richtung nach oben zu verkippen, um unterhalb des Schaltarms mehr Aufnahmeraum für eine im Durchmesser größere Kardanwelle oder ein anderes Element des Triebstrangs bereitzustellen.

Auch ist es nach einer Weiterbildung der Erfindung vorgesehen, dass das Stützlager zwei Anlageflächen aufweist, an denen der Schaltarm mittels zweier korrespondierenden Anlageflächen abstützbar ist. Diese Ausbildung sorgt einerseits für eine axialfeste Abstützung des Schaltarms am Getriebegehäuse und andererseits auch für eine Ausbildung der Schalthebelanordnung ohne für den Fahrer des Fahrzeugs als negativ empfundene Schaltungsanordnung aufgrund von Elastizitäten im Kraftübertragungsweg zwischen dem Schalthebel und dem Getriebe. Erwärmt sich nämlich das Getriebe aufgrund des Eintrags von Wärme durch den Antriebsmotor, so führt dies zu temperaturbedingten Ausdehnungen des Getriebegehäuses, denen der Schalthebel in seinem lichten Abstand von Getriebegehäuse aufgrund der direkten Anbindung des Schalthebelgelenks über den Schaltarm am Getriebegehäuse folgt und sich somit das Schaltbild für den Fahrer auch bei deutlichen Temperaturveränderungen der Anordnung Motor-Getriebe nicht verändert. Dem Fahrer des Fahrzeugs wird ein gleich bleibendes Schaltgefühl zur Verfügung gestellt.

In ähnlicher Weise wie der Schaltarm ist auch das Schaltstangengelenk nach einer Weiterbildung der Erfindung an der Schaltstange im Winkel zur Horizontalen veränderbar gelagert. Auch diese Konfiguration trägt der etwaigen Notwendigkeit Rechnung, unterhalb des Schalthebelgelenks mehr Aufnahmeraum für Triebstrangkomponenten bereitstellen zu müssen, so dass eine etwaige Verschwenkung der Schalthebelanordnung relativ zur Längsachse des Fahrzeugs in Richtung nach oben gerichtet benötigt wird.

Auch ist es nach einer Weiterbildung der Erfindung vorgesehen, dass das Schaltstangengelenk zwei Anlageflächen aufweist, an denen die Schaltstange mittels zweier korrespondierenden Anlageflächen abstützbar ist. In zu einer betreffend den Schaltarm oben beschriebenen Weise ähnlichen Weise wird dadurch eine spielfreie Ausgestaltung der Anbindung der Schaltstange am Getriebe erreicht, so dass der Fahrer von einem gleich bleibenden Schaltgefühl profitiert, auch wenn sich deutliche Temperaturveränderungen in der Motor-Getriebeeinheit mit entsprechenden temperaturbedingten Ausdehnungen einstellen.

Es ist nach einer Weiterbildung der Erfindung auch vorgesehen, dass der Schalthebel einen sich vom ersten Gelenk in Richtung zum Schalthebelknopf erstreckenden ersten Abschnitt und einen sich vom ersten Gelenk in Richtung zur Schaltstange erstreckenden zweiten Abschnitt aufweist, an dem ein Gelenk zur Abstützung eines Eingriffsabschnitts der Schaltstange angeordnet ist. Die beiden Abschnitte können eine unterschiedliche Längserstreckung aufweisen, wobei mit dem Längenverhältnis der beiden Abschnitte auch das Übersetzungsverhältnis zwischen dem Betätigungsweg am Schalthebelknopf beim Schaltvorgang und dem Betätigungsweg des Betätigungselements des Getriebes verändert werden kann. Der Eingriffsabschnitt der Schaltstange kann mit dem Gelenk am unteren Ende des zweiten Abschnitts des Schalthebels kraftschlüssig gekoppelt werden und zwar derart, dass eine Relativdrehbewegung des Eingriffsabschnitts am Gelenk möglich ist, das Gelenk aber den Eingriffsabschnitt weitgehend spielfrei aufnimmt.

Es ist nach einer Weiterbildung der Erfindung auch vorgesehen, dass die erste Schwenkachse in einem ersten Winkel im Bereich von etwa 10 Grad bis etwa 80 Grad relativ zur Längsachse des Schaltarms geneigt angeordnet ist. Mit dem Neigungswinkel der Schrägachse des Schaltarmgelenks kann der Betrag der Auslenkung des ersten Gelenks in horizontaler Richtung beeinflusst werden. Wäre in einem Gedankenmodell der Schaltarm am Stützlager starr angebunden, so dass eine Drehkippbewegung des Getriebes zu einem kreissegmentförmigen Drehbewegungsanteil führen würde mit einer in horizontaler Richtung projizierten Verlagerungsbewegung vom Betrag X, so führt die Anbindung des Schaltarms am Stützlager mit einer Schrägachse zu einer lateralen Verlagerungsbewegung vom Betrag aX, wobei der Faktor "a" vom Betrag des ersten Winkels der ersten Schwenkachse relativ zur Längsachse der Schaltarms abhängt.

Mit zunehmendem Betrag des ersten Winkels wird der Faktor "a" kleiner, so dass die laterale Verlagerungsbewegung des ersten Gelenks in Abhängigkeit des Drehwinkels des Getriebes bei seiner Drehkippbewegung auch zu "Null" reduziert werden kann. Damit kann erreicht werden, dass durch eine entsprechende Ausbildung des ersten Winkels die Horizontalbewegung des Schalthebelgelenks in Folge einer Drehkippbewegung des Getriebes auf Null reduziert wird. Gemäß der vorliegenden Erfindung ist die zweite Schwenkachse in einem zweiten Winkel im Bereich von 20 Grad bis 80 Grad relativ zur Längsachse der Schaltstange geneigt angeordnet. Mit einer Veränderung des zweiten Winkels wird der Winkelbetrag der Auslenkung des Schalthebels relativ zum Winkelbetrag bei einer nach dem vorstehend beschriebenen Denkmodell gedachten starren Anbindung der Schaltstange auch am Betätigungselement des Getriebes beeinflusst.

Würde bei einer starren Anbindung das Getriebe einen Drehkippwinkel von beispielsweise 5 Grad absolvieren, dann würde auch der Schalthebel in der ausgelenkten Stellung des Getriebes einen Neigungswinkel zur Vertikalen von 5 Grad aufweisen. Durch den zweiten Winkel wird der Betrag der Auslenkung des Schalthebels relativ zum Betrag des Drehkippwinkels des Getriebes verringert. Auf diese Weise wird das Verhältnis des Winkels des Schalthebels relativ zum Drehkippwinkels des Getriebes modifiziert. So wird durch die Auslegung des zweiten Winkels der Gesamtbetrag der Verlagerungsbewegung des Schalthebelknopfes infolge einer Drehkippbewegung des Getriebes in Abhängigkeit von der horizontalen Verlagerungsbewegung des Schalthebelgelenks eingestellt. Dabei ist in Erinnerung zu rufen, dass sich der Gesamtbetrag der Verlagerungsbewegung des Schalthebelknopfes aus einer additiven Überlagerung der Führungsbewegung in Form der horizontalen Verlagerungsbewegung des Schalthebelgelenks und der Relativbewegung in Form der Verlagerungsbewegung des Schalthebelknopfes relativ zum Schalthebelgelenk zusammensetzt. Der Betrag der Relativbewegung wird durch den zweiten Winkel beeinflusst.

Die Erfindung wird nachstehend anhand der beigefügten Zeichnungen beispielhaft näher erläutert. Es zeigen:
- Fig. 1: eine perspektivische Darstellung einer Ausführungsform einer bekannten Schalthebelanordnung;
- Fig. 2: eine Darstellung ähnlich Fig.1, die eine Ausführungsform der erfindungsgemäßen Schalthebelanordnung zeigt;
- Fig. 3: Darstellung der Detailansicht "A" der Fig. 2;
- Fig. 4: Darstellung der Detailansicht "B" der Fig. 2;
- Fig. 5: ein Diagramm des Verhältnisses der Auslenkung des Schaltarmgelenks der erfindungsgemäßen Schalthebelanordnung zur Auslenkung nach der bekannten Ausführungsform, aufgetragen über dem ersten Winkel; und
- Fig. 6: ein Diagramm des Verhältnisses der Auslenkung des Schalthebels der erfindungsgemäßen Schalthebelanordnung zur Auslenkung nach der bekannten Ausführungsform, aufgetragen über dem zweiten Winkel.

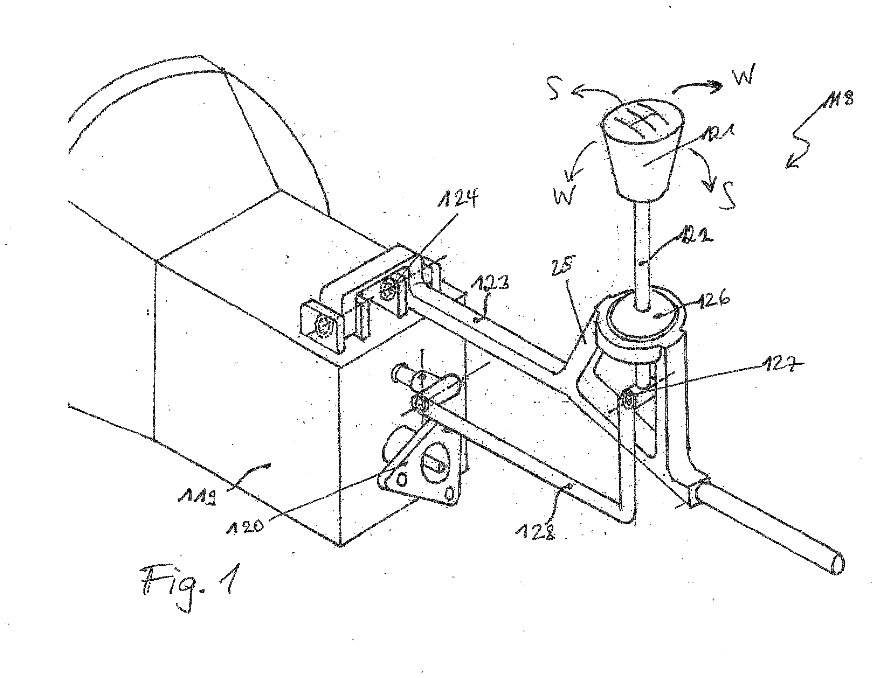

Fig. 1 zeigt eine perspektivische Darstellung einer Ausführungsform einer bekannten Schalthebelanordnung 118. Es ist ein Gangwechselgetriebe 119 schematisch dargestellt, welches sechs Gangstufen für die Vorwärtsbewegung eines nicht näher dargestellten Fahrzeugs und einen Rückwärtsgang aufweist. An dem Gehäuse des Gangwechselgetriebes 119 ist zudem ein Abtriebsflansch 120 vorgesehen, an dem beispielsweise eine nicht näher dargestellte Kardanwelle des Fahrzeugs angeflanscht werden kann.

Die erste und die zweite Gangstufe des Gangwechselgetriebes 119 liegen in einer ersten, die dritte und die vierte Gangstufe in einer zweiten, die fünfte und sechste Gangstufe in einer dritten Schaltgasse und der Rückwärtsgang in einer nicht näher dargestellten weiteren Schaltgasse. Der Fahrer kann mittels einer Bewegung eines Schalthebels 122 in Richtung der Pfeile W einerseits die Schaltgasse wählen und andererseits durch eine Bewegung des Schalthebels in Richtung der Pfeile S innerhalb einer Schaltgasse zwischen den Gangstufen schalten. Zur einfachen Bedienung weist der Schalthebel 122 einen Schalthebelknopf 121 auf.

Der Schalthebel 122 ist von einem weitgehend in der Horizontalebene verlaufenden Schaltarm 123 axialfest an einem Stützlager 124 am Gangwechselgetriebe 119 abgestützt. Zudem ist der Schalthebel 122 relativ zu dem Schaltarm 123 an einem Schalthebelgelenk 126 gelagert.

Der Schalthebel 122 ist an seinem unterhalb des Gelenks 126 liegenden Ende mittels einer Buchse 127 mit einer auf das Gangwechselgetriebe 119 wirkenden Schaltstange 128 gekoppelt. Um innerhalb des Gangwechselgetriebes 119 zu schalten oder zu wählen, ist die Schaltstange 128 mit einer nicht näher dargestellten, innerhalb des Gangwechselgetriebes 119 angeordneten Schaltwelle gekoppelt.

Wenn der Fahrer eine Schaltgasse wählen will, so verschwenkt er den Schalthebel 122 in Wählrichtung (W). Dabei wird auch das mit der Schaltstange 128 gekoppelte Ende des Schalthebels 122 verschwenkt. Eine Verschwenkung des mit der Schaltstange 128 verbundenen Endbereichs der Betätigungsstange 122 wird dabei in eine Drehbewegung der Schaltstange 128 übersetzt. Die Drehbewegungen der Schaltstange 128 führen dann schließlich über die mit der Schaltstange 128 gekoppelte Schaltwelle zur Wahl einer entsprechenden Schaltgasse im Gangwechselgetriebe.

Wenn der Fahrer innerhalb einer Schaltgasse zwischen zwei Schaltstufen schalten will, so verschwenkt er den Schalthebel 122 in Schaltrichtung (S). Infolge einer Verschwenkung des Schalthebels 122 um einen Schaltwinkel, wird auch die mit der Schaltstange 128 verbundene erste Buchse 127 translatorisch in Längsrichtung des Fahrzeugs verschoben. Diese translatorische Bewegung wird auf die Schaltstange 128 und über diese auf das Gangwechselgetriebe 119 übertragen.

Da das Gelenk 126 weiter oben angeordnet ist als das Stützlager 124, mit welchem der Schalthebel 122 am Gangwechselgetriebe 19 gelagert ist, verläuft ein Abschnitt 125 des Schaltarms 123 in Richtung zum Gelenk 126 hin schräg nach oben. Wenn ein Fahrzeug mit der bekannten Schalthebelanordnung 118 stark beschleunigt wird, kann es dazu kommen, dass Kippbewegungen des Gangwechselgetriebes 119 auf den Schaltarm 123 und dann auch auf den Schalthebel 122 übertragen werden. Dabei wird auch das Gelenk 126 seitlich gekippt. Dies hat zur Folge, dass der Schalthebel eine deutliche Querbewegung ausführt. Die genannten Nachteile werden mittels einer erfindungsgemäßen Schalthebelanordnung 1 behoben.

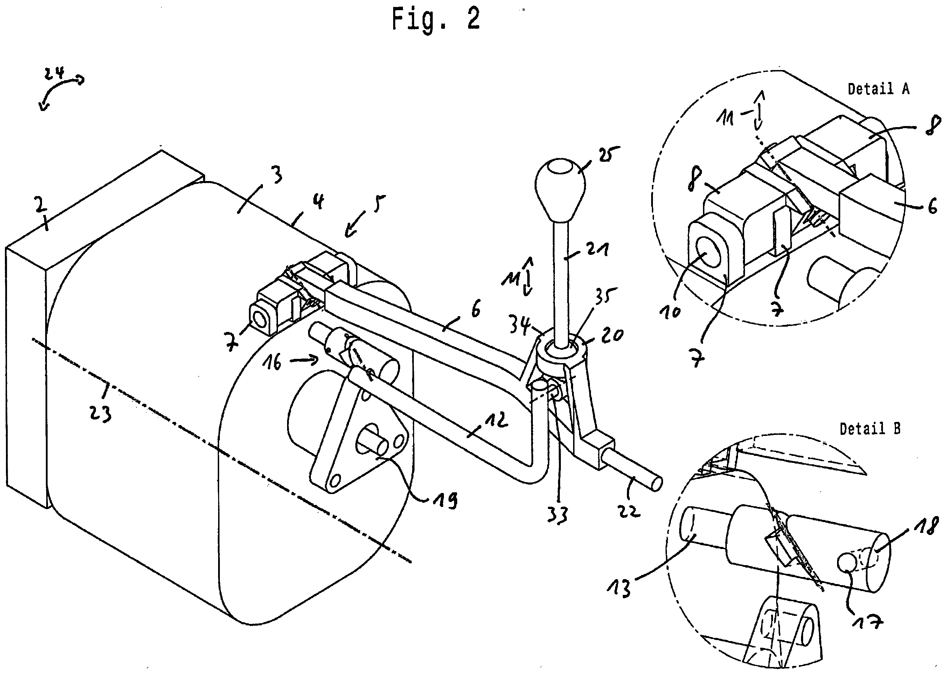

Fig. 2 der Zeichnung zeigt eine perspektivische und schematische Darstellung einer Ausführungsform der erfindungsgemäßen Schalthebelanordnung 1.

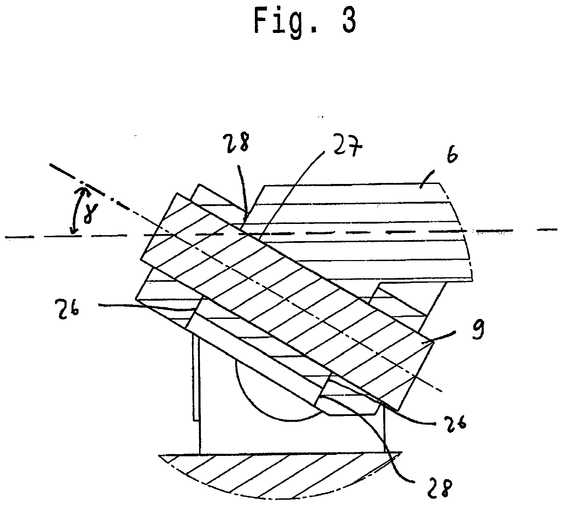

An einer Brennkraftmaschine 2 schließt sich ein Gangwechselgetriebe 3 mit einem am Gehäuse 4 des Gangwechselgetriebes 3 angeordneten Stützlager 5 an. Das Stützlager 5 dient der Abstützung des Schaltarms 6 in einer näher anhand von Fig. 3 ersichtlichen Weise. Das Stützlager 5 besitzt Anschlusslaschen 7, die in der Detailansicht "A" der Fig. 2 näher ersichtlich sind. Über eine Schaltarmanbindung 8 kann die näher anhand von Fig. 3 der Zeichnung ersichtliche erste Schwenkachse 9 mittels der in der Detailansicht näher ersichtlichen und in den Anschlusslaschen 7 drehbar gelagerten Stutzen 10 in Richtung des Pfeiles 11 vertikal einstellbar gelagert werden. Der Schaltarm 6 ist über eine an der ersten Schwenkachse 9 zwischen zwei Anlageflächen 26 angeordnete Bohrung 27, die die Schwenkachse 9 aufnimmt, relativ zur Schwenkachse 9 verschwenkbar oder drehbar angeordnet. Der Schaltarm liegt dabei über Anlageflächen 28 an den Anlageflächen 26 an.

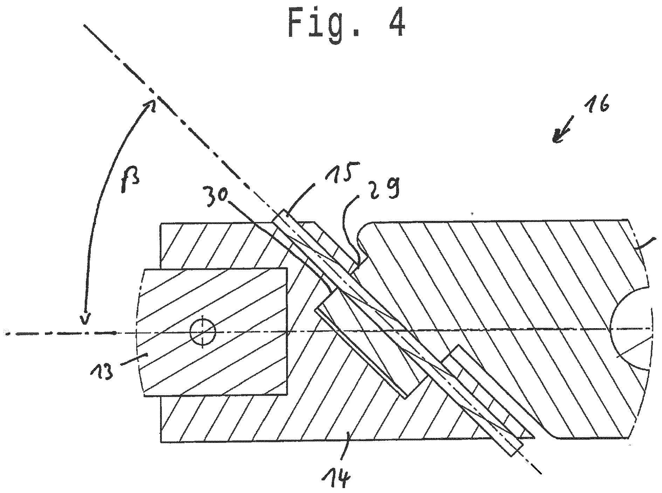

Innerhalb des Gehäuses 4 ist ein nicht näher dargestelltes Betätigungselement in der Form beispielsweise einer zentralen Schaltwelle angeordnet, welches über die Schaltstange 12 betätigt werden kann. Wie es sich näher anhand der Detailansicht "B" der Fig. 2 und anhand von Fig. 4 der Zeichnung ergibt, ragt ein einseitiger Abschnitt 13 des Betätigungselements aus dem Getriebegehäuse 4 hervor und befindet sich in Eingriff mit einer Aufnahme 14 der zweiten Schwenkachse 15, mit der die Schaltstange 12 mit dem Betätigungselement in Wirkverbindung gebracht werden kann.

Die Verbindung der Schaltstange 12 mit dem Betätigungselement findet dabei über ein Schaltstangengelenk 16 statt, welches die bereits erwähnte zweite Schwenkachse 15 umfasst. Die Schaltstange 12 ist über einen in einer Bohrung 17 des Schaltstangengelenks 16 angeordneten Stift 18 vertikal in Richtung des Pfeiles 11 winkelveränderbar angeordnet, um zusammen mit der ebenfalls in Richtung des Pfeiles 11 vorgesehenen vertikalen Verlagerungsmöglichkeit des Schaltarms 6 unterhalb der Schalthebelanordnung 1 für eine mit dem Abtriebsflansch 19 gekoppelte, nicht näher dargestellte Kardanwelle zu schaffen. Fig. 4 der Zeichnung zeigt darüber hinaus, dass die Schaltstange 12 mittels Anlageflächen 29 an Anlageflächen 30 der Aufnahme 14 angeordnet ist. Die zweite Schwenkachse 15 durchsetzt eine Bohrung 31 der Schaltstange 12, so dass die Schaltstange 12 an der zweiten Schwenkachse 15 verschwenkbar oder drehbar angeordnet ist.

Der Schalthebel 21 ist in einem als Kugelgelenk mit in einer Kugelaufnahme 34 gelagerten Kugel 35 ausgebildeten Schalthebelgelenk 20 gelagert, um die Wähl- und Schaltbewegungen des Schalthebels 21 in gewünschter Weise zu ermöglichen. Ein endseitiger Abschnitt 22 des Schaltarms 6 dient der verschwenkbaren Lagerung des Schaltarms 6 an der nicht näher dargestellten Karosserie eines Fahrzeugs.

Wenn das mit der Schalthebelanordnung 1 ausgestattete Fahrzeug einer starken Beschleunigungsbewegung unterzogen wird oder die Brennkraftmaschine 2 gestartet wird oder auch ein Übergang des Fahrzeugs vom Schubbetrieb in den Zugbetrieb stattfindet, führt die Kombination aus Brennkraftmaschine 2 und Gangwechselgetriebe 3 eine Drehkippbewegung in Richtung des Pfeiles 24 aus und zwar um eine in Längsrichtung des Fahrzeugs verlaufende Drehachse 23 herum.

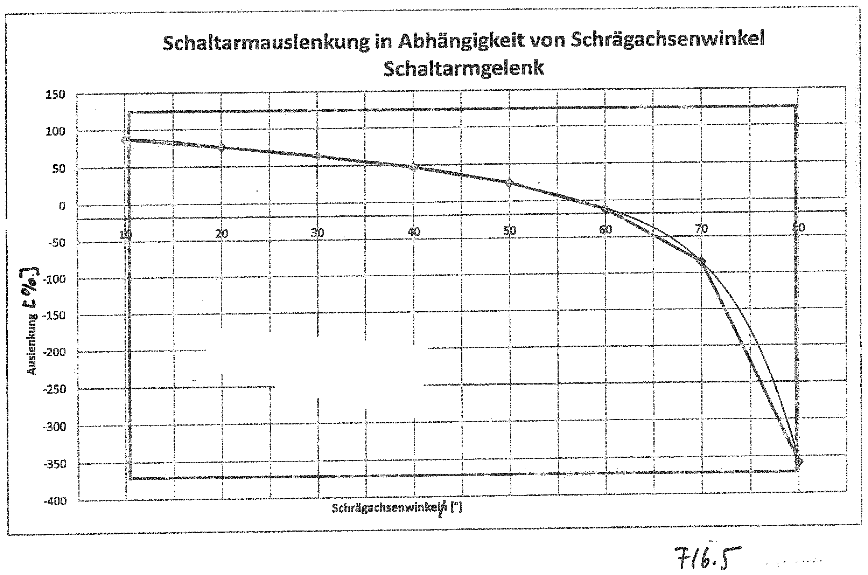

Diese Drehkippbewegung führt zu einer seitlichen Verlagerung des Schalthebelgelenks in horizontaler Richtung. Der Betrag der Verlagerungsbewegung hängt von Betrag des ersten Winkels "γ" nach Detail "A" der Fig. 2 bzw. Fig. 3 ab. Fig. 5 der Zeichnung zeigt die Auslenkung des Schalthebelgelenks 20 in Prozent bezogen auf die Auslenkung einer starren Schalthebelänordnung.

Wie es ohne weiteres ersichtlich ist, nimmt der Betrag der Auslenkung mit steigendem Schrägachsenwinkel, also steigendem ersten Winkel ab, um bei einem Winkelwert von etwa 63 Grad einen Nulldurchgang aufzuweisen. Bei dem der Zeichnung zu Grunde liegenden Drehkippwinkel des Getriebes 3 von 5 Grad wird der laterale Versatz des Schalthebelgelenks bei einem ersten Winkel von etwa 63 Grad auf Null reduziert.

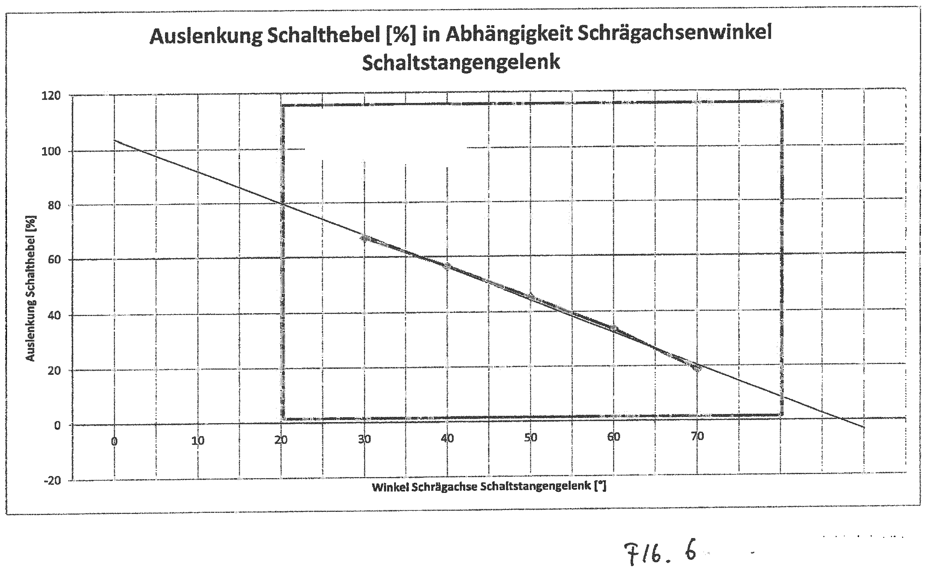

Fig. 6 der Zeichnung zeigt den Einfluss des Winkels der zweiten Schwenkachse 15 des Schaltstangengelenks 16 auf das prozentuale Verhältnis zwischen dem Drehkippwinkel des Getriebes 3 und dem tatsächlichen Neigungswinkel des Schalthebels 21 bei einer Drehkippbewegung des Getriebes 3. Bei einem zweiten Winkel von "β" gemäß Detail "B" nach Fig. 2 bzw. Fig. 4 von 40 Grad beträgt das Verhältnis etwa 58 Prozent, d.h. der Schalthebel nimmt bei einem Drehkippwinkel des Getriebes 3 einen Neigungswinkel von etwa 2.9 Grad ein, nämlich 0.58 * 5 Grad.

Wird der zweite Winkel "β" auf einen Wert von 60 Grad eingestellt, ergibt sich am Schalthebel statt der 5 Grad Drehkippwinkel des Getriebes 3 nur noch ein Winkel von etwa 1.9 Grad. Fig. 5 der Zeichnung zeigt, dass das Schalthebelgelenk 20 in zu der Richtung des Drehkippwinkels entgegengesetzte Richtung horizontal verlagert werden kann, so dass sich durch eine entsprechende Auswahl des ersten und zweiten Winkels auch eine Konfiguration der erfindungsgemäßen Schalthebelanordnung 1 einstellen lässt, bei der Schalthebelknopf 25 trotz einer Drehkippbewegung des Getriebes 3 in Ruhestellung verbleibt.

Hinsichtlich vorstehend im Einzelnen nicht näher erläuterter Merkmale der Erfindung wird im Übrigen ausdrücklich auf die Patentansprüche und die Zeichnungen verwiesen.

**Bezugszeichenliste**

| | | | |
|---|---|---|---|
| 1 | Schalthebelanordnung | 118 | bekannte Schalthebelanordnung |
| 2 | Brennkraftmaschine | 119 | Gangwechselgetriebe |
| 3 | Gangwechselgetriebe | 120 | Abtriebsflansch |
| 4 | Gehäuse | 121 | Schalthebelknopf |
| 5 | Stützlager | 122 | Schalthebel |
| 6 | Schaltarm | 123 | Schaltarm |
| 7 | Anschlusslaschen | 124 | Stützlager |
| 8 | Schaltarmanbindung | 125 | Abschnitt |
| 9 | erste Schwenkachse | 126 | Schalthebelgelenk |
| 10 | Stutzen | 127 | Buchse |
| 11 | Pfeil | 128 | Schaltstange |
| 12 | Schaltstange | | |
| 13 | Abschnitt | | |
| 14 | Aufnahme | | |
| 15 | zweite Schwenkachse | 31 | Bohrung |
| 16 | Schaltstangengelenk | 32 | erster Abschnitt |
| 17 | Bohrung | 33 | zweiter Abschnitt |
| 18 | Stift | 34 | Kugelaufnahme |
| 19 | Abtriebsflansch | 35 | Kugel |
| 20 | Schalthebelgelenk | | |
| 21 | Schalthebel | | |
| 22 | Abschnitt | | |
| 23 | Drehachse | | |
| 24 | Pfeil | | |
| 25 | Schalthebelknopf | | |
| 26 | Anlagefläche | | |
| 27 | Bohrung | | |
| 28 | Anlagenfläche | | |
| 29 | Anlagefläche | | |
| 30 | Anlagefläche | | |

## Patentansprüche

1. Schalthebelanordnung (1) mit einem Schalthebel (21) zur manuellen Betätigung eines Gangwechselgetriebes (3) eines Fahrzeugs mittels mindestens eines auf Getriebebauteile wirkenden Betätigungselements und einem ersten Gelenk (20), welches den Schalthebel (21) relativ zu einem den Schalthebel (21) an einem Gehäuse (4) des Gangwechselgetriebes (3) axialfest an einem Stützlager (5) abstützenden Schaltarm (6) lagert, wobei der Schalthebel (21) zum Wählen verschiedener Schaltgassen in einer ersten Richtung (W) und zum Schalten verschiedener Gangstufen in einer zur ersten Richtung (W) im Wesentlichen orthogonalen Richtung (S) am ersten Gelenk (20) verschwenkbar angelenkt ist, und mit einer mit dem Betätigungselement gekoppelten Schaltstange (12), wobei das Stützlager (5) eine relativ zur Längsachse des Schaltarms (6) unter einem ersten Winkel (γ) zur Längsachse des Schaltarms (6) angeordnete erste Schwenkachse (9) aufweist, an der der Schaltarm (6) relativ zum Gehäuse (4) des Gangwechselgetriebes (3) verschwenkbar angeordnet ist **dadurch gekennzeichnet, dass** zwischen der Schaltstange (12) und dem Betätigungselement ein Schaltstangengelenk (16) mit einer relativ zur Längsachse der Schaltstange (12) unter einem zweiten Winkel (β) von 20 Grad bis 80 Grad zur Längsachse der Schaltstange (12) angeordneten zweiten Schwenkachse (15) vorgesehen ist, an der die Schaltstange (12) relativ zum Betätigungselement verschwenkbar angeordnet ist.

2. Schalthebelanordnung (1) nach Anspruch 1, **dadurch gekennzeichnet, dass** die erste Schwenkachse (9) relativ zu einer Längsachse des Gehäuses (4) des Gangwechselgetriebes (3) am Stützlager (5) im Winkel relativ zur Horizontalen veränderbar gelagert ist.

3. Schalthebelanordnung nach Anspruch 1 oder 2, **dadurch gekennzeichnet, dass** das Stützlager (5) zwei Anlageflächen (26) aufweist, an denen der Schaltarm (6) mittels zweier korrespondierender Anlageflächen (28) abstützbar ist.

4. Schalthebelanordnung (1) nach einem der vorstehenden Ansprüche, **dadurch gekennzeichnet, dass** das Schaltstangengelenk (16) an der Schaltstange (12) im Winkel zur Horizontalen veränderbar gelagert ist.

5. Schalthebelanordnung (1) nach einem der vorstehenden Ansprüche, **dadurch gekennzeichnet, dass** das Schaltstangengelenk (16) zwei Anlageflächen (29) aufweist, an denen die Schaltstange (12) mittels zweier korrespondierender Anlageflächen (30) abstützbar ist.

6. Schalthebelanordnung (1) nach einem der vorstehenden Ansprüche, **dadurch gekennzeichnet, dass** der Schalthebel (21) einen sich vom ersten Gelenk (20) in Richtung zum Schalthebelknopf (25) erstreckenden ersten Abschnitt (31) und einen sich vom ersten Gelenk (20) in Richtung zur Schaltstange (12) erstreckenden zweiten Abschnitt (33) aufweist, an dem ein Gelenk zur Abstützung eines Eingriffsabschnitts der Schaltstange (12) angeordnet ist.

7. Schalthebelanordnung (1) nach einem der vorstehenden Ansprüche, **dadurch gekennzeichnet, dass** das erste Gelenk (20) eine Kugelaufnahme (34) und eine vom Schalthebel (21) durchsetzte Kugel (35) aufweist und im lichten vertikalen Abstand zur Längsachse der Schaltarms (12) angeordnet ist.

8. Schalthebelanordnung (1) nach einem der vorstehenden Ansprüche, **dadurch gekennzeichnet, dass** die erste Schwenkachse (9) in einem ersten Winkel (γ) im Bereich von etwa 10 Grad bis etwa 80 Grad relativ zur Längsachse des Schaltarms (6) geneigt angeordnet ist.

9. Schalthebelanordnung (1) nach einem der vorstehenden Ansprüche, **dadurch gekennzeichnet, dass** eine Kippbewegung des Gangwechselgetriebes (3) um eine Längsachse (23) des Gehäuses (4) des Getriebes (3) zu einer Verlagerungsbewegung des ersten Gelenks (20) in horizontaler Richtung führt.

10. Schalthebelanordnung (1) nach einem der vorstehenden Ansprüche, **dadurch gekennzeichnet, dass** eine Schwenkbewegung des Schalthebels zum Schalten verschiedener Gangstufen eine translatorische Bewegung des Betätigungselements bewirkt.

## Claims

1. A gear-change lever arrangement (1) with a gear-change lever (21) for manually actuating a gear-change gearbox (3) of a vehicle by means of at least one actuating element which acts on gearbox components, and with a first articulation (20) which forms a bearing for the gear-change lever (21) relative to a gear-change arm (6) which supports the gear-change lever (21) on a casing (4) of the gear-change gearbox (3) in axially fixed manner on a supporting bearing (5), wherein the gear-change lever (21) is articulated to the first articulation (20) so as to be pivotable in a first direction (W) for choosing different shift gates and in a direction (S) substantially orthogonal to the first direction (W) for selecting different gears, and with a gear-change rod (12) which is coupled with the actuating element, wherein the supporting bearing (5) has a first pivot pin (9) arranged relative to the longitudinal axis of the gear-change arm (6) at a first angle (γ) to the longitudinal axis of the gear-change arm (6), on which pin the gear-change arm (6) is arranged so as to be pivotable relative to the casing (4) of the gear-change gearbox (3),
**characterised in that** a gear-change rod articulation (16) with a second pivot pin (15) arranged relative to the longitudinal axis of the gear-change rod (12) at a second angle (β) of 20 degrees to 80 degrees to the longitudinal axis of the gear-change rod (12) is provided between the gear-change rod (12) and the actuating element, on which pin the gear-change rod (12) is arranged so as to be pivotable relative to the actuating element.

2. A gear-change lever arrangement (1) according to Claim 1, **characterised in that** the first pivot pin (9) relative to a longitudinal axis of the casing (4) of the gear-change gearbox (3) is mounted changeably at an angle relative to the horizontal on the supporting bearing (5).

3. A gear-change lever arrangement according to Claim 1 or Claim 2, **characterised in that** the supporting bearing (5) has two bearing faces (26) on which the gear-change arm (6) can be supported by means of two corresponding bearing faces (28).

4. A gear-change lever arrangement (1) according to one of the preceding claims, **characterised in that** the gear-change rod articulation (16) is mounted on the gear-change rod (12) changeably at an angle to the horizontal.

5. A gear-change lever arrangement (1) according to one of the preceding claims, **characterised in that** the gear-change rod articulation (16) has two bearing faces (29) on which the gear-change rod (12) can be supported by means of two corresponding bearing faces (30).

6. A gear-change lever arrangement (1) according to one of the preceding claims, **characterised in that** the gear-change lever (21) has a first portion (31) extending from the first articulation (20) in the direction of the gear-change lever knob (25) and a second portion (33) extending from the first articulation (20) in the direction of the gear-change rod (12), on which second portion an articulation for supporting an engagement portion of the gear-change rod (12) is arranged.

7. A gear-change lever arrangement (1) according to one of the preceding claims, **characterised in that** the first articulation (20) has a ball receptacle (34) and a ball (35) through which the gear-change lever (21) passes, and is arranged in the internal vertical distance from the longitudinal axis of the gear-change arm (12).

8. A gear-change lever arrangement (1) according to one of the preceding claims, **characterised in that** the first pivot pin (9) is arranged inclined at a first angle (γ) in the range of approximately 10 degrees to approximately 80 degrees relative to the longitudinal axis of the gear-change arm (6).

9. A gear-change lever arrangement (1) according to one of the preceding claims, **characterised in that** a tilting movement of the gear-change gearbox (3) about a longitudinal axis (23) of the casing (4) of the gearing (3) leads to a displacement movement of the first articulation (20) in the horizontal direction.

10. A gear-change lever arrangement (1) according to one of the preceding claims, **characterised in that** a pivoting movement of the gear-change lever for selecting different gears brings about a translatory movement of the actuating element.

## Revendications

1. Agencement de levier de commutation (1) comportant un levier de commutation (21) permettant l'actionnement manuel d'une boîte de vitesses (3) d'un véhicule au moyen d'au moins un élément d'actionnement agissant sur des composants de la boîte de vitesses, et une première articulation (20) qui assure le montage du levier de commutation (21) par rapport à un bras de commutation (6) appliquant ce levier de commutation (21) sur un palier de support (5), fixe axialement sur le carter (4) de la boîte de vitesses (3), le levier de commutation (21) étant articulé sur la première articulation (20) de manière à pouvoir pivoter dans une première direction (W) pour permettre de sélectionner différentes voies de commutation et dans une seconde direction (S) essentiellement perpendiculaire à la première direction (W), pour permettre de commuter différents rapports de vitesse, ainsi qu'une tige de commutation (12) couplée à l'élément d'actionnement, le palier de support (5) comportant un premier axe de pivotement (9) faisant un premier angle (γ) par rapport à l'axe longitudinal du bras de commutation (6), et sur lequel le bras de commutation (6) est monté pivotant par rapport au carter (4) de la boîte de vitesses (3),
**caractérisé en ce qu'**
il est prévu, entre la tige de commutation (12) et l'élément d'actionnement une articulation de la tige de commutation (16) un second axe de pivotement (15) faisant un second angle (β) de 20 degrés à 80 degrés par rapport à l'axe longitudinal de la tige de commutation (12), et sur lequel la tige de commutation (12) est montée pivotante par rapport à l'élément d'actionnement.

2. Agencement de levier de commutation (1) conforme à la revendication 1,
**caractérisé en ce que**
le premier axe de pivotement (9) est monté sur le palier de support (5) relativement à l'axe longitudinal du carter (4) de la boîte de vitesses (3) de façon à faire un angle variable par rapport à l'horizontale.

3. Agencement de levier de commutation (1) conforme à la revendication 1 ou 2,
**caractérisé en ce que**
le palier de support (5) comporte deux surfaces d'appui (26) sur lesquelles peut s'appuyer le bras de commutation (6) par l'intermédiaire de deux surfaces d'appui correspondantes (28).

4. Agencement de levier de commutation (1) conforme à l'une des revendications précédentes,
**caractérisé en ce que**
l'articulation de la tige de commutation (16) est montée sur la tige de commutation (12) avec un angle variable par rapport à l'horizontale.

5. Agencement de levier de commutation (1) conforme à l'une des revendications précédentes,
**caractérisé en ce que**
l'articulation de la tige de commutation (16) comporte deux surfaces d'appui (29) sur lesquelles peut s'appuyer la tige de commutation (12) par l'intermédiaire de deux surfaces d'appui (30) correspondantes.

6. Agencement de levier de commutation (1) conforme à l'une des revendications précédentes,
**caractérisé en ce que**
le levier de commutation (21) comporte un premier segment (31) s'étendant de la première articulation (20) en direction de sa poignée (25) ainsi qu'un second segment (33) s'étendant de la première articulation (20) en direction de la tige de commutation (12) et sur lequel est montée une articulation d'appui d'un segment de mise en prise de la tige de commutation (12).

7. Agencement de levier de commutation (1) conforme à l'une des revendications précédentes,
**caractérisé en ce que**
la première articulation (20) comporte un logement sphérique (34) et une rotule (35) traversée par le levier de commutation (21), et est montée à distance verticale de l'axe longitudinal du bras de commutation (12).

8. Agencement de levier de commutation (1) conforme à l'une des revendications précédentes,
**caractérisé en ce que**
le premier axe de pivotement (9) est incliné par rapport à l'axe longitudinal du bras de commutation (6) d'un premier angle (γ) situé dans la plage d'environ 10 degrés à environ 80 degrés.

9. Agencement de levier de commutation (1) conforme à l'une des revendications précédentes,
**caractérisé en ce qu'**
un basculement de la boîte de vitesses (3) autour de l'axe longitudinal (23) du carter (4) de celle-ci entraîne un déplacement de la première articulation (20) en direction horizontale.

10. Agencement de levier de commutation (1) conforme à l'une des revendications précédentes,
**caractérisé en ce qu'**
un pivotement du levier de commutation pour commuter différents rapports de vitesses entraîne une translation de l'élément d'actionnement.
